# EUROPÄISCHE PATENTANMELDUNG

(11) **EP 1 832 474 A2**
(43) Veröffentlichungstag der Anmeldung: **12.09.2007**
(21) Anmeldenummer: 07003536.5
(22) Anmeldetag: 21.02.2007
(51) Int. Cl.: B60R 16/03

(54) **Elektronisches Steuerungssystem, Kabelstrang und Stecker**

(30) Priorität: 08.03.2006 DE 102006010640
(71) Anmelder: Robert Bosch GmbH, 70184 Stuttgart (DE)
(72) Erfinder: Bort, Peter, Dr., 71732 Tamm (DE)
(74) Vertreter: Thürer, Andreas

(57) **Zusammenfassung**

Ein Steuerungssystem ist mit einem Steuergerät und weiteren mit dem Steuergerät verbundenen Elektronikkomponenten ausgestattet. Ein Kabelstrang verbindet das Steuergerät mit den Elektronikkomponenten. Der Kabelstrang weist einen Stecker auf, mit dem er an eine Anschlussbuchse des Steuergeräts anschließbar ist. In einem Gehäuse des Steckers oder innerhalb einer Umhüllung des Kabelstrangs ist ein Halbleiterspeicherbaustein angeordnet. Der Halbleiterspeicherbaustein ist über an den Stecker geführte Signalleitungen mit dem Steuergerät verbindbar.

## Beschreibung

Die Erfindung betrifft ein elektronisches Steuerungssystem gemäß dem Oberbegriff des Patentanspruchs 1. Die Erfindung betrifft des Weiteren einen Kabelstrang und einen Stecker.

Das gattungsgemäße Steuerungssystem kommt insbesondere an landwirtschaftlichen Nutzfahrzeugen, z.B. Ackerschleppern, oder an Bau- und Transportfahrzeugen zum Einsatz. Aus dem Datenblatt RD 95 500/06.05 der Firma Bosch Rexroth AG ist ein Steuergerät für mobile hydraulische Arbeitsmaschinen bekannt, welches auf einem Microcontroller basiert. Das Steuergerät empfängt Eingangssignale von Bedienelementen. Unter Berücksichtigung der Eingangssignale werden elektromechanische Stellglieder - z.B. Proportionalmagnete - zur Betätigung hydraulischer Steuerventile angesteuert. An weiteren Eingänge werden Signale von Wegsensoren oder Drehzahlsensoren zugeführt, um eine Regelung, z.B. eines Fahrantriebs durchzuführen. Des Weiteren ist eine CAN-Bus Schnittstelle vorhanden. Das Steuergerät ist mit Anschlussbuchsen ausgestattet, die in Verbindung mit entsprechenden Anschlusssteckern gegen ein Eindringen von Flüssigkeit in das Gehäuse abgedichtet sind. Die Anschlussbuchsen sind mit den Anschlusssteckern eines Kabelbaums verbunden. Dieser verbindet die elektrischen Komponenten des Steuerungssystems mit dem Steuergerät. Um Steuerprogramme zu speichern und auszuführen, ist das Steuergerät mit einem internen Speicher ausgestattet. Die Größe des internen Speichers ist bei der Bestückung der Platine festgelegt.

Gleichartige Steuergeräte werden bei einer Vielzahl unterschiedlicher Fahrzeuge und Arbeitsmaschinen eingesetzt. Die benötigte Größe des internen Speichers kann zwischen unterschiedlichen Arbeitsmaschinen und je nach Art der Anwendung stark unterschiedlich sein. Ein kontinuierliches Datenlogging, z.B. zur Realisierung eines Fahrtenschreibers für sicherheitskritische Anwendungen, erfordert einen großen verfügbaren Arbeitsspeicher. Es ist jedoch unwirtschaftlich, die Steuergeräte grundsätzlich mit der maximalen Größe des Speichers auszustatten. Steuergeräte, die für einfache Steuerungsaufgaben eingesetzt werden, würden so in der Herstellung unnötig teuer. Die Steuergeräte nach Bedarf mit unterschiedlichem Speicherausbau zu produzieren, erhöht den Aufwand für die Produktion und Logistik und führt ebenfalls zu einer ungewünschten Verteuerung der Steuergeräte.

Den Speicher im Steuergerät nach der Fertigung aufzustocken ist sehr aufwändig und gefährdet bei unsachgemäßer Montage die zuverlässige Funktion des Steuergeräts. Einen separaten Massenspeicher über den CAN-Bus anzuschließen ist ebenfalls aufwändig, da dieser als zusätzliches Gerät am Fahrzeug montiert werden muss und einen separaten Stecker am Kabelbaum benötigt. Wenn man am Steuergerät einen Einschub für eine Speicherkarte vorsieht, müssen aufwendige Maßnahmen für die Abdichtung des Einschubs getroffen werden.

Es ist die Aufgabe der vorliegenden Erfindung, ein elektronisches Steuerungssystem im Hinblick auf eine möglichst einfache und kostengünstige Anbindung von zusätzlichem Speicher zu verbessern.

Diese Aufgabe wird durch ein elektronisches Steuerungssystem mit den Merkmalen des Patentanspruchs 1 gelöst. Die Aufgabe wird ferner durch ein elektronisches Steuerungssystem mit den Merkmalen des Patentanspruchs 2 gelöst. Die Aufgabe wird ebenfalls bereits durch einen gemäß dem unabhängigen Patentanspruch 6 ausgebildeten Kabelstrang sowie durch einen gemäß dem unabhängigen Patentanspruch 7 ausgebildeten Stecker gelöst.

Das erfindungsgemäße Steuerungssystem ist mit einem Steuergerät und weiteren mit dem Steuergerät verbundenen Elektronikkomponenten ausgestattet. Ein Kabelstrang verbindet das Steuergerät mit den Elektronikkomponenten. Der Kabelstrang weist einen Stecker auf, mit dem er an eine Anschlussbuchse des Steuergeräts anschließbar ist. Gemäß einem ersten Aspekt der vorliegenden Erfindung ist in einem Gehäuse des Steckers ein Halbleiterspeicherbaustein angeordnet. Der Halbleiterspeicherbaustein ist über an den Stecker geführte Signalleitungen mit dem Steuergerät verbindbar.

Das Anordnen eines Halbleiterspeicherbausteins im Stecker erlaubt es, den verfügbaren Speicher des Steuergerätes auf einfache und kostengünstige Weise zu erweitern, während die Abdichtung des Steuergeräts unverändert bestehen bleibt. Die Montage des Halbleiterspeicherbausteins kann zusammen mit der Montage des Steckers am Kabelstrangs erfolgen. Die Steckermontage muss ohnehin für jeden Fahrzeugtyp separat durchgeführt werden, da sich die Anzahl der belegten Kontakte bei verschiedenen Fahrzeugtypen meist unterscheidet. Ein zusätzliches Montieren des Halbleiterspeicherbausteins ist mit nur geringem Aufwand verbunden. Je nach benötigter Speichergröße können anwendungsspezifisch und fahrzeugspezifisch verschiedenen Halbleiterspeicherbausteine ausgewählt und im Stecker montiert werden. Das Steckergehäuse schützt den Halbleiterspeicherbaustein vor Umwelteinflüssen. Es kann natürlich auch ein Stecker mit integriertem Halbleiterspeicherbaustein als vormontierte Baueinheit angeboten werden. Dies erleichtert die Steckermontage am Kabelstrang. Außerdem lässt sich der Halbleiterspeicherbaustein flüssigkeitsdicht im Steckergehäuse vergießen und ist dann besonders gut gegen Umwelteinflüsse geschützt. Der Halbleiterspeicherbaustein kann gleichermaßen dazu verwendet werden, den Arbeitsspeicher, in dem Daten abgelegt werden, und den Programmspeicher, in dem Steuerprogramme gespeichert sind, zu erweitern. Gegebenenfalls können auch spezielle Steuerprogramme, die sich auf einen bestimmten Fahrzeugtyp beziehen, im Halbleiterspeicherbaustein statt im internen Speicher des Steuergeräts abgelegt sein und z.B. bei Bedarf in den internen Speicher des Steuergerätes geladen werden. Dadurch werden umfangreiche Anwendungen (Programme) ermöglicht, die den im Steuergerät zur Verfügung stehenden Speicher überschreiten.

Gemäß einem weiteren Aspekt der vorliegenden Erfindung ist der Kabelstrang mit einer Umhüllung versehen, und der Halbleiterspeicherbaustein ist innerhalb der Umhüllung des Kabelstrangs angeordnet. Auch diese Anordnung des Halbleiterspeicherbausteins erlaubt eine einfache fahrzeug- oder anwendungsspezifische Ergänzung des Arbeitsspeichers im Steuergerät, wie im vorhergehenden Absatz erläutert. Der Kabelbaum wird üblicherweise für jeden Fahrzeugtyp eigens hergestellt. Die Montage des Halbleiterspeicherbausteins kann bei der Herstellung des Kabelbaums mit nur geringem Mehraufwand erfolgen.

Vorteilhafte Ausgestaltungen der vorliegenden Erfindung sind in den Unteransprüchen angegeben.

Vorzugsweise ist der Halbleiterspeicherbaustein über eine an der Anschlussbuchse vorhandene digitale Eingangs-/Ausgangsschnittstelle vom Steuergerät ansprechbar. Eine solche Schnittstelle ist bei den meisten Steuergeräten ohnehin vorhanden, so dass eine Erweiterung des Speichers keine Modifikation der Hardware des Steuergeräts bedarf.

Gemäß einer besonders bevorzugten Ausbildung der vorliegenden Erfindung ist der Halbleiterspeicherbaustein über eine serielle Eingangs-/Ausgangsschnittstelle ansprechbar. Dies verringert den Verkabelungsaufwand zum Anschließen des Halbleiterspeicherbausteins an den Stecker erheblich. Außerdem sind für serielle Datenverbindungen sehr zuverlässige Übertragungsstandards bekannt, z.B. Low Voltage Differential Signaling (LVDS). Es können zudem bestehende Schnittstellenimplementierungen, z.B. der Universal Serial Bus (USB), eingesetzt werden.

Wenn der Halbleiterspeicherbaustein als nicht flüchtiger Speicher ausgebildet ist, können Daten unabhängig vom Steuergerät am Fahrzeug gespeichert , werden. So können z.B. Konfigurationsdaten für das Steuergerät im Halbleiterspeicherbaustein abgelegt sein. Dies erlaubt eine automatische Konfiguration des Steuergerätes und eine Anpassung an den speziellen Aufbau des Steuersystems. Bei einem Austausch des Steuergerätes bleiben die Konfigurationsdaten erhalten.

Gemäß einer weiteren bevorzugten Ausgestaltung ist im Gehäuse des Steckers eine Aufnahme für den Halbleiterbaustein gebildet. Dies erlaubt eine sichere Befestigung des Halbleiterbausteins im Steckergehäuse.

Die Montage des Halbleiterspeicherbausteins im Stecker und der elektrische Anschluss des Halbleiterspeicherbausteins gestalteten sich besonders einfach, wenn in der Aufnahme Steckkontakte oder Federkontakte zur Kontaktierung des Halbleiterspeicherbausteins vorgesehen sind.

Nachfolgend werden die vorliegende Erfindung und deren Vorteile unter Bezugnahme auf die in den Figuren dargestellten Ausführungsbeispiele näher erläutert.
- Figur 1: ist eine schematische Darstellung eines Steuerungssystems einer mobilen hydraulischen Arbeitsmaschine gemäß einer ersten Ausführungsförm, bei der ein Halbleiterspeicherbaustein in einem Anschlussstecker des Kabelstrangs angeordnet ist, und
- Figur 2: ist eine schematische Darstellung eines Steuerungssystems einer mobilen hydraulischen Arbeitsmaschine gemäß einer zweiten Ausführungsform, bei der ein Halbleiterspeicherbaustein innerhalb einer Umhüllung des Kabelstrangs angeordnet ist.

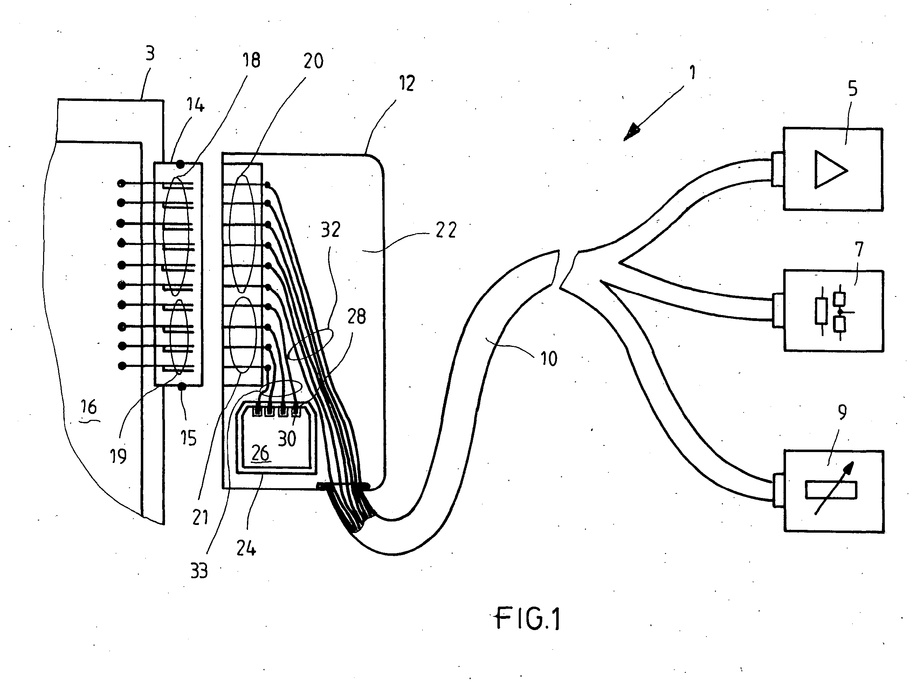

Nach Figur 1 ist ein elektronisches Steuerungssystem 1 einer mobilen hydraulischen Arbeitsmaschine mit einem Steuergerät 3 sowie weiteren elektronischen bzw. elektromechanischen Komponenten ausgestattet. In der Zeichnung sind beispielhaft ein Ventilverstärker 5, ein Wegsensor 7 und ein Potentiometer 9 dargestellt, welches über einen Bedienhebel verstellbar ist. Das Steuergerät ist mit einer elektronischen Platine 16 ausgestattet, auf der ein Microprocessor (nicht dargestellt) angeordnet ist.

Die einzelnen Komponenten 5, 7 und 9 sind über einen Kabelstrang 10 mit dem Steuergerät 3 verbunden. Der Kabelstrang 10 besitzt einen Anschlussstecker 12 - im Schnitt dargestellt -, der auf eine Anschlussbuchse 14 am Steuergerät aufsteckbar ist. An der Anschlussbuchse 14 ist ein Dichtprofil 15 vorgesehen. In der Anschlussbuchse 14 sind Steckkontakte 18 und 19 angeordnet. Diese nehmen entsprechende Kontaktstifte 20 und 21 des Anschlusssteckers 12 auf. Im Gehäuse 22 des Anschlusssteckers 12 ist eine Ausnehmung 24 gebildet. In dieser Ausnehmung 24 ist eine Speicherkarte 26 angeordnet. Die Kontaktstifte 21 sind durch die Adern 33 mit Federkontakten 28 verbunden, die in der Ausnehmung 24 angebracht sind. Die Federkontakte 28 stellen eine elektrische Verbindung zu Kontaktflächen 30 der Speicherkarte 26 her. Die Kontaktstifte 20 sind mit den Adern 32 des Kabelstrangs 10 verbunden. Das Gehäuse 22 des Anschlusssteckers 12 umgibt die darin angeordneten Abschnitte der Adern 32 und 33 sowie die Speicherkarte 26 vollständig. Das Gehäuse 22 lässt sich öffnen, so dass die Kontaktstifte 20 und 21 eingesetzt werden können und die Speicherkarte 26 in der Ausnehmung 24 befestigt werden kann. Die Speicherkarte 26 wird durch die Federkontakte 28 gehalten. Zusätzlich kann eine Klemmbefestigung vorgesehen sein.

Über die Steckkontakte 19 und die Kontaktstifte 21 ist bei aufgestecktem Stecker 12 eine Verbindung zwischen dem Steuergerät 3 und der Speicherkarte 26 hergestellt. Die Steckkontakte 19 der Anschlussbuchse 14 stellen also eine Speicherschnittstelle des Steuergeräts 3 dar. Wird dazu eine serielle Schnittstelle eingesetzt, sind nur wenige Kontakte notwendig. Das beschriebene Ausführungsbeispiel orientiert sich an der USB-Schnittstelle, bei der 4 Kontakte eingesetzt werden. Es sind jedoch auch serielle Schnittstellen mit 2 oder 3 Kontakten bekannt. Grundsätzlich kann auch eine parallele Speicherschnittstelle eingesetzt werden. Diese verursacht aber durch die höhere Anzahl der benötigten Kontakte einen unerwünschten Zusatzaufwand.

Über die Speicherschnittstelle, d.h. über die Steckkontakte 19, lassen sich Daten jeglicher Art, insbesondere Programme, Parameter, Log-Daten, Konfigurationsdaten etc. vom Steuergerät 3 auf der Speicherkarte 26 ablegen oder von der Speicherkarte 26 in das Steuergerät 3 einlesen. Die Speicherkarte 26 beinhaltet einen nichtflüchtigen Speicher, z.B. einen FLASH Speicher. Die gespeicherten Daten bleiben daher auch bei einem Ausfall der Spannungsversorgung erhalten.

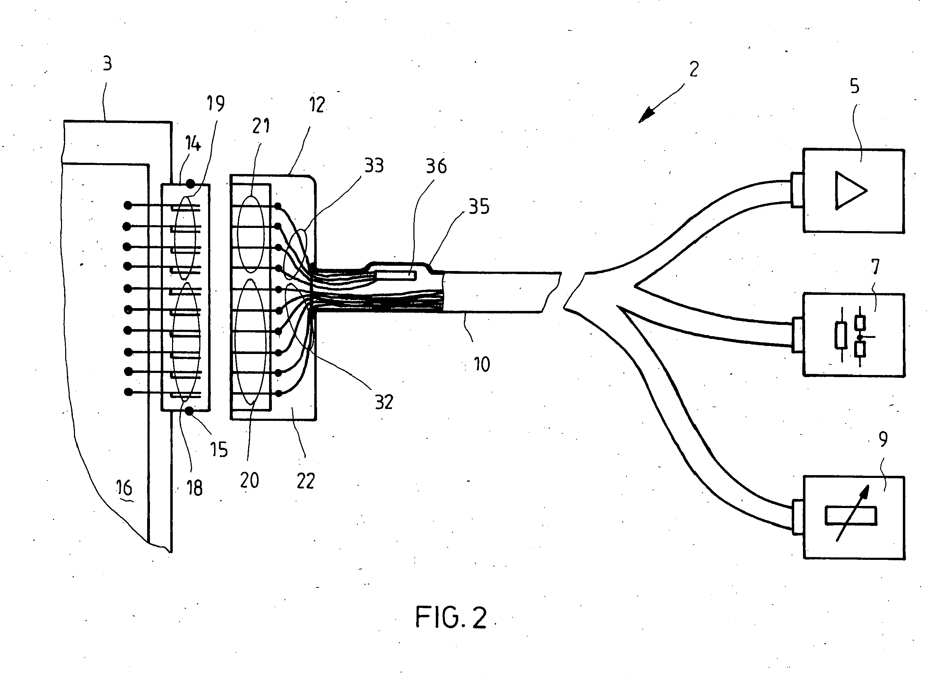

Eine zweite Ausführungsform der vorliegenden Erfindung ist in Figur 2 dargestellt. Das Steuerungssystem 2 gemäß der zweiten Ausführungsform stellt lediglich eine leichte Abwandlung des Steuerungssystems 1 hinsichtlich der Bauform und Anordnung eines externen Speichers dar. Das Steuergerät 3 ist über einen Kabelstrang 10 mit den weiteren elektronischen bzw. elektromechanischen Komponenten 5, 7 und 9 verbunden. Am Steuergerät 3 ist eine Anschlussbuchse 14 vorhanden, auf die der Stecker 12 des Kabelstrangs aufsteckbar ist. Die Anschlussbuchse 14 besitzt Steckkontakte 18 und 19, die Kontaktstifte 20 und 21 des Steckers 12 aufnehmen. Innerhalb einer Umhüllung 35 des Kabelstrangs 10 ist ein Speicherbaustein 36 verliersicher und vor Umwelteinflüssen geschützt gehalten. Die Adern 32 erstrecken sich von den Kontaktstiften 20 in den Kabelstrang 10 zu den Komponenten 5, 7 bzw. 9. Die Adern 33 verbinden die Kontaktstifte 21 mit dem Speicherbaustein 36.

Die Bauform des Speicherbausteins 36 ist die eines länglichen Stiftes, um eine gute Befestigung innerhalb der Umhüllung 35 zu gewährleisten. Gegebenfalls kann der Speicherbaustein 36 auch in einer Trägerhülse (nicht dargestellt) oder einer Trägerschale montiert sein, um eine mechanische Belastung des Speicherbaustein 36 durch die Befestigung innerhalb der Umhüllung 35 zu vermeiden.

### Bezugszeichenliste

- 1: Steuerungssystem
- 2: Steuerungssystem
- 3: Steuergerät
- 5: Ventilverstärker
- 7: Wegsensor
- 9: Potentiometer
- 10: Kabelstrang
- 12: Stecker
- 14: Anschlussbuchse
- 15: Dichtprofil
- 16: Platine
- 18: Steckkontakte
- 19: Steckkontakte
- 20: Kontaktstifte
- 21: Kontaktstifte
- 22: Steckergehäuse
- 24: Ausnehmung
- 26: Speicherkarte
- 28: Federkontakte
- 30: Kontaktflächen
- 32: Adern
- 33: Adern
- 35: Umhüllung
- 36: Speicherbaustein

## Patentansprüche

1. Elektronisches Steuerungssystem, insbesondere zum Einsatz in einem Kraftfahrzeug oder einer mobilen Arbeitsmaschine, mit einem Steuergerät (3) und weiteren mit dem Steuergerät (3) verbundenen Elektronikkomponenten (5, 7, 9) und mit einem Kabelstrang (10), der das Steuergerät (3) mit den Elektronikkomponenten (5, 7, 9) verbindet und der einen Stecker (12) aufweist, mit dem er an eine Anschlussbuchse (14) des Steuergeräts (3) anschließbar ist,
**dadurch gekennzeichnet, dass**
in einem Gehäuse (22) des Steckers ein Halbleiterspeicherbaustein (26) angeordnet ist und
dass der Halbleiterspeicherbaustein (26) über an den Stecker (12) geführte Signalleitungen (33) mit dem Steuergerät (3) verbindbar ist.

2. Elektronisches Steuerungssystem, insbesondere zum Einsatz in einem Kraftfahrzeug oder einer mobilen Arbeitsmaschine, mit einem Steuergerät (3) und weiteren mit dem Steuergerät (3) verbundenen Elektronikkomponenten (5, 7, 9) und mit einem Kabelstrang (10), der das Steuergerät (3) mit den Elektronikkomponenten (5, 7, 9) verbindet und der eine Umhüllung (35) und einen Stecker (12) aufweist, mit dem er an eine Anschlussbuchse (14) des Steuergeräts (3) anschließbar ist,
**dadurch gekennzeichnet, dass**
innerhalb der Umhüllung (35) des Kabelstrangs (10) ein Halbleiterspeicherbaustein (36) angeordnet ist und
dass der Halbleiterspeicherbaustein (36) über an den Stecker (12) geführte Signalleitungen (33) mit dem Steuergerät (3) verbindbar ist.

3. Elektronisches Steuerungssystem nach Anspruch 1 oder 2, **dadurch gekennzeichnet, dass** der Halbleiterspeicherbaustein (26; 36) über eine an der Anschlussbuchse (14) vorhandene digitale Eingangs-/Ausgangsschnittstelle (19) vom Steuergerät (3) ansprechbar ist.

4. Elektronisches Steuerungssystem nach einem der Ansprüche 1 bis 3, **dadurch gekennzeichnet, dass** der Halbleiterspeicherbaustein (26; 36) über eine serielle Eingangs-/Ausgangsschnittstelle ansprechbar ist.

5. Elektronisches Steuerungssystem nach einem der Ansprüche 1 bis 4, **dadurch gekennzeichnet, dass** der Halbleiterspeicherbaustein (26; 36) als nicht flüchtiger Speicher ausgebildet ist.

6. Kabelstrang zum Verbinden eines Steuergeräts (3) mit weiteren Elektronikkomponenten (5, 7, 9) innerhalb eines elektronischen Steuerungssystems (2), mit einer Umhüllung (35) und mit einem Stecker (12), der an eine Anschlussbuchse (14) des Steuergeräts (3) anschließbar ist,
**dadurch gekennzeichnet, dass**
innerhalb der Umhüllung (35) des Kabelstrangs ein Halbleiterspeicherbaustein (36) angeordnet ist und
dass der Halbleiterspeicherbaustein (36) über an den Stecker (12) geführte Signalleitungen (33) mit dem Steuergerät (3) verbindbar ist.

7. Stecker zum Anschließen eines Kabelstrangs (10) an eine Anschlussbuchse (14) eines elektronischen Steuergeräts (3), welches über den Kabelstrang (10) mit weiteren Elektronikkomponenten (5, 7, 9) verbunden ist,
**dadurch gekennzeichnet, dass**
in einem Gehäuse (22) des Steckers (12) ein Halbleiterspeicherbaustein (26) angeordnet ist und
dass der Halbleiterspeicherbaustein (26) über an den Stecker (12) geführte Signalleitungen (33) mit dem Steuergerät (3) verbindbar ist.

8. Elektronisches Steuerungssystem nach Anspruch 7, **dadurch gekennzeichnet, dass** im Gehäuse (22) des Steckers (12) eine Aufnahme (24) für den Halbleiterspeicherbaustein (26) gebildet ist.

9. Elektronisches Steuerungssystem nach Anspruch 8, **dadurch gekennzeichnet, dass** in der Aufnahme (24) Steckkontakte oder Federkontakte (28) zur Kontaktierung des Halbleiterspeicherbausteins (26) vorhanden sind.
